# EUROPEAN PATENT SPECIFICATION

(11) **EP 3 828 065 B1**
(45) Date of publication and mention of the grant of the patent: **29.06.2022**
(21) Application number: 18934888.1
(22) Date of filing: 28.09.2018
(51) Int. Cl.: B62J 27/20, B62J 50/21, B60R 21/20

(54) **SADDLE RIDING TYPE VEHICLE COMPRISING AN AIRBAG DEVICE**
SATTELFAHRZEUG MIT EINER AIRBAGVORRICHTUNG
VÉHICULE DE TYPE À SELLE AVEC UN DISPOSITIF DE COUSSIN DE SÉCURITÉ GONFLABLE

(43) Date of publication of application: 02.06.2021
(73) Proprietor: HONDA MOTOR CO., LTD., Minato-ku Tokyo 107-8556 (JP)
(72) Inventor: SATO, Takashi, Wako-shi, Saitama 351-0193 (JP)
(74) Representative: Herzog, Markus
(86) International application number: PCT/JP2018/036391
(87) International publication number: WO 2020/065948

(56) References cited:
- WO-A1-2017/208993
- DE-A1- 10 106 437
- IT-A1- MI20 092 076
- JP-A- 2003 252 269
- JP-A- 2004 314 835
- JP-A- 2005 262 975
- JP-A- 2007 269 048
- JP-B2- 4 129 136

## Description

### [Technical Field]

The present invention relates to for a saddle riding type vehicle comprising an airbag device.

### [Background Art]

In the related art, an airbag device that includes an inflator, an airbag configured to be deployed upward, and a retainer accommodating the airbag and that is disposed in front of a passenger at a front portion of a saddle riding type vehicle is known (see Patent Literature 1, for example).

The prior art document IT MI20 092 076 A1 discloses the features of the preamble of claim 1.

### [Citation List]

### [Patent Literature]

[Patent Literature 1]

Japanese Patent Laid-Open No. 2008-183913

### [Summary of Invention]

### [Technical Problem]

Incidentally, since a steering handle, a meter, and the like are disposed at the front portion of the saddle riding type vehicle, and a component disposition space is limited, it is desirable that the airbag device be able to be compactly disposed at the front portion of the saddle riding type vehicle.

The present invention was made in view of the aforementioned circumstance, and an object thereof is to enable compact disposition of the airbag device at the front portion of the saddle riding type vehicle.

### [Solution to Problem]

According to the present invention, there is provided a saddle riding type vehicle comprising an airbag device that includes: an inflator (53); an airbag (52) configured to expand by gas discharged from the inflator (53); and a retainer (51) accommodating the airbag (52), the airbag (52) being deployed upward from an opening (51e) of the retainer (51), in which the retainer (51) is provided below a meter (36) provided in a vicinity of a steering handle (23), and the meter (36) openably and closably covers the opening (51e).

Also, in the aforementioned invention, the meter (36) may be turned with a hinge (36c) and open the opening (51e).

Also, in the aforementioned invention, the meter (36) may be provided such that a display surface (36b) on an upper surface is inclined downward on a rear side in a side view of the vehicle, and the hinge (36c) may have a pivot axis line directed in a vehicle width direction and may be provided at a rear end portion of the meter (36).

Further, in the aforementioned invention, the meter (36) may cover a part of the opening (51e) from above in a state in which the opening (51e) is opened.

Also, in the aforementioned invention, the meter (36) may be turned backward to open a front portion of the opening (51e).

Also, in the aforementioned invention, the retainer (51) and the meter (36) may be provided in front of the handle (23) .

Moreover, in the aforementioned invention, a cap member (54) covering the opening (51e) and configured to be cleaved by the airbag (52) may be provided, and the meter (36) may cover the cap member (54) from above.

### [Advantageous Effects of Invention]

The saddle riding type vehicle according to the present invention includes: the inflator; the airbag configured to expand by the gas discharged from the inflator; and the retainer accommodating the airbag, the airbag is deployed upward from the opening of the retainer, the retainer is provided below the meter that is provided in the vicinity of the steering handle, and the meter openably and closably covers the opening.

With this configuration, the meter openably and closably covers the opening of the retainer, and the airbag can be deployed upward from the opening in a state in which the opening is opened. It is thus possible to dispose the retainer using the space below the meter and to compactly dispose the airbag device at the front portion of the motorcycle.

Also, in the aforementioned invention, the meter may be turned with the hinge and open the opening. With this configuration, the motor is turned with the hinge, and it is thus possible to cause the meter to be appropriately turned and to open or close the opening of the retainer.

Also, in the aforementioned invention, the meter may be provided such that the display surface on the upper surface is inclined downward on the rear side in a side view of the vehicle. The hinge may have the pivot axis line directed in the vehicle width direction and may be provided at the rear end portion of the meter. With this configuration, the meter disposed to be inclined downward on the rear side in a side view of the vehicle is turned with the hinge at the rear end portion of the meter, and it is thus possible to efficiently open the opening of the retainer.

Further, in the aforementioned invention, the meter may cover a part of the opening from above in the state in which the opening is opened. With this configuration, the meter covering the part of the opening from above can guide the deployment direction of the airbag.

In addition, in the aforementioned invention, the meter may be turned backward and open the front portion of the opening. With this configuration, it is possible to efficiently cause the front portion of the opening to be exposed upward and to satisfactorily deploy the airbag upward by the meter being turned backward.

Also, in the aforementioned invention, the retainer and the meter may be provided in front of the handle. With this configuration, it is possible to cause the airbag to be deployed upward from the retainer located below the meter in front of the handle.

Moreover, in the aforementioned invention, the cap member covering the opening and configured to be cleaved by the airbag is provided, and the meter covers the cap member from above. With this configuration, it is possible to prevent foreign matters from entering the retainer with the cap member.

### [Brief Description of Drawings]

[Figure 1] Figure 1 is a left side view of a motorcycle according to an embodiment of the present invention.
[Figure 2] Figure 2 is a view of a peripheral portion of a handle at a front portion of the motorcycle when seen from the rear side.
[Figure 3] Figure 3 is a sectional view along III-III in Figure 2.
[Figure 4] Figure 4 is a left side view of the airbag device and a meter.
[Figure 5] Figure 5 is a perspective view of the airbag device and the meter when seen from the left front side.
[Figure 6] Figure 6 is a left side view illustrating a state in which an airbag is deployed upward.
[Figure 7] Figure 7 is a view of a state in which an opening of a retainer is opened when seen from above.

### [Description of Embodiments]

Hereinafter, an embodiment of the present invention will be described with reference to drawings. Note that indications of directions such as front, rear, left, right, up, and down in the description will be defined to be the same as directions relative to a vehicle body unless particularly indicated otherwise. Also, the reference sign FR represented in each diagram represents the front side of the vehicle body, the reference sign UP represents the upper side of the vehicle body, and the reference sign LH represents the left side of the vehicle body.

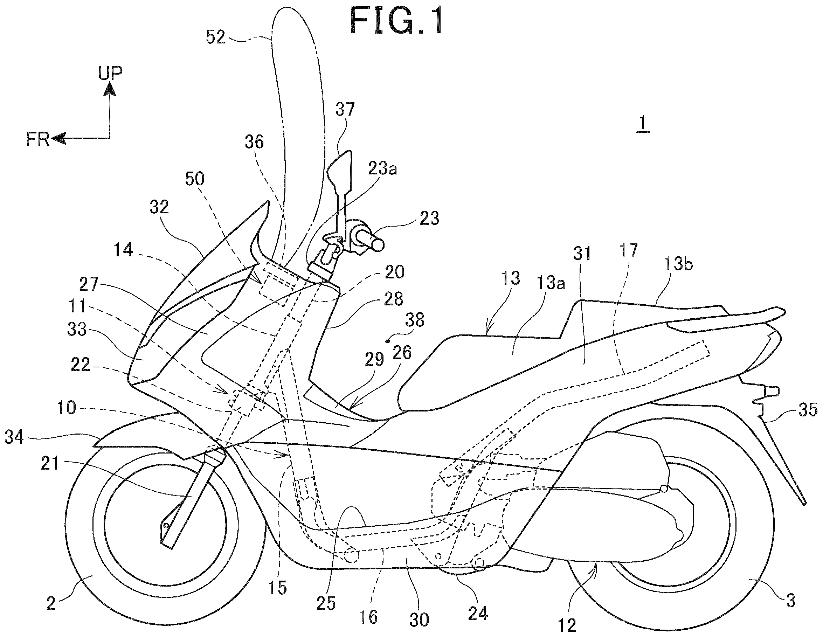

Figure 1 is a left side view of a motorcycle 1 according to an embodiment of the present invention. In Figure 1, a state in which an airbag 52 as will be described later expands and is deployed is illustrated. Note that Figure 1 illustrates only components on the left side including reference signs for components that are provided as pairs on the left and right sides.

The motorcycle 1 is a saddle riding type vehicle of a scooter type including a vehicle body frame 10, a steering system 11 adapted to support a front wheel 2 in a steerable manner, a power unit 12 supported at a rear portion of the vehicle body frame 10, a rear wheel 3, and a seat 13 in which a passenger is seated in a straddling manner.

The vehicle body frame 10 includes a head pipe 14 provided at a front end of the vehicle body frame 10, a main frame 15 extending toward a rear lower side from the head pipe 14, a pair of left and right lower frames 16, 16 extending backward from a lower end portion of the main frame 15, and a pair of left and right rear frames 17, 17 extending backward toward a rear upper side from the lower frames 16, 16. The head pipe 14 is disposed at the center of a vehicle width similarly to the front wheel 2.

The steering system 11 includes a steering shaft 20 pivotally supported by the head pipe 14, a pair of left and right front forks 21, 21 disposed on both left and right sides of the front wheel 2 and supporting the front wheel 2, a bridge member 22 secured to a lower end of the steering shaft 20 and coupling upper portions of the left and right front forks 21, 21, and a handle 23 secured to an upper end of the steering shaft 20. The handle 23 for steering is connected to the steering shaft 20 via a handle post 23a secured to the upper end of the steering shaft 20.

In a side view of the vehicle, the head pipe 14 is inclined backward with respect to the vertical direction by the amount of a predetermined caster angle set in the motorcycle 1. The steering shaft 20 is inserted into and pivotally supported by the head pipe 14 and is disposed so as to be inclined backward in a side view of the vehicle.

The power unit 12 is a unit swing engine that has functions of an engine as a drive source for the rear wheel 3 and of a swing arm that supports the rear wheel 3. The power unit 12 is pivotally supported by the vehicle body frame 10 so as to be able to swing via a link member 24 provided at a front end portion of the power unit 12.

The seat 13 is provided above the rear frame 17. The seat 13 includes a front-side seat 13a in which a driver is seated and rear-side seat 13b in which a fellow passenger is seated in an integrated manner.

A pair of left and right step floors 25, 25 on which the driver places his/her left and right feet are provided on a front lower side of the front-side seat 13a.

The motorcycle 1 includes a vehicle body cover 26 adapted to cover a vehicle body such as the vehicle body frame 10.

The vehicle body cover 26 includes a front cover 27 that covers upper portions of the head pipe 14 and the steering system 11 from the front side and from the left and right sides and an inner cover 28 that is continued to a rear edge of the front cover 27 and covers the upper portions of the head pipe 14 and the steering system 11 from the rear side.

Also, the vehicle body cover 26 includes a center cover 29 located on a front lower side of the front-side seat 13a, an undercover 30 that covers the vehicle body from the lower side below the step floors 25, 25, and a rear-side cover 31 that covers the rear frames 17, 17 from the sides below the seat 13.

A wind screen 32 that is inclined toward the rear upper side in a side view of the vehicle is attached to an upper portion of the front cover 27. A headlight 33 is provided on a front surface of the front cover 27.

The motorcycle 1 includes a front fender 34 and a rear fender 35.

The meter 36 adapted to display information regarding the motorcycle 1 such as a vehicle speed is disposed in front of the handle 23. Rear-view mirrors 37, 37 are attached to the handle 23.

A front portion of the center cover 29 is continued to a lower portion of the inner cover 28. The center cover 29 is located inside left and right legs of the driver stretched from the front-side seat 13a to the step floors 25, 25.

A straddled space 38 recessed downward is sectioned by the inner cover 28, the center cover 29, and a front surface of the front-side seat 13a in a side view of the vehicle. The passenger can straddle the motorcycle 1 via the straddled space 38 when the passenger rides on and gets off the motorcycle 1.

The motorcycle 1 includes an airbag device 50 adapted to protect the passenger from impact at a front portion. The airbag device 50 is disposed between the steering system 11 and the wind screen 32 and is located in front of the handle 23 in a side view of the vehicle.

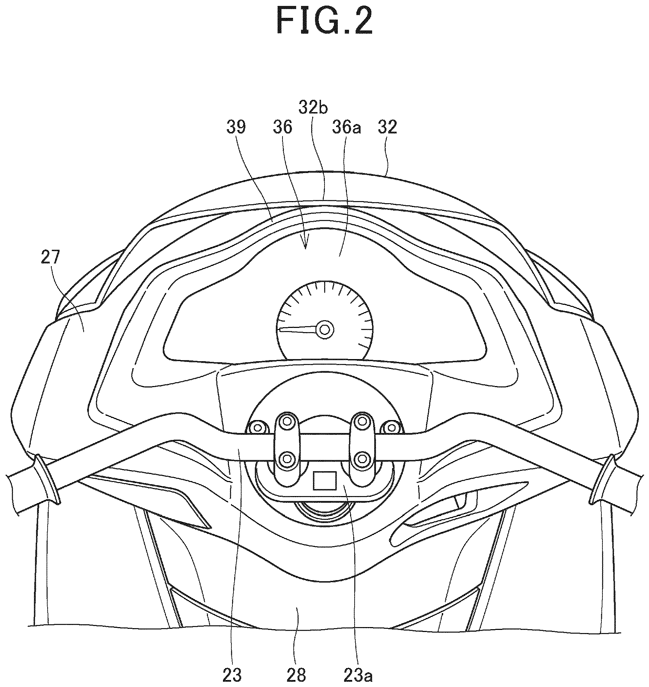

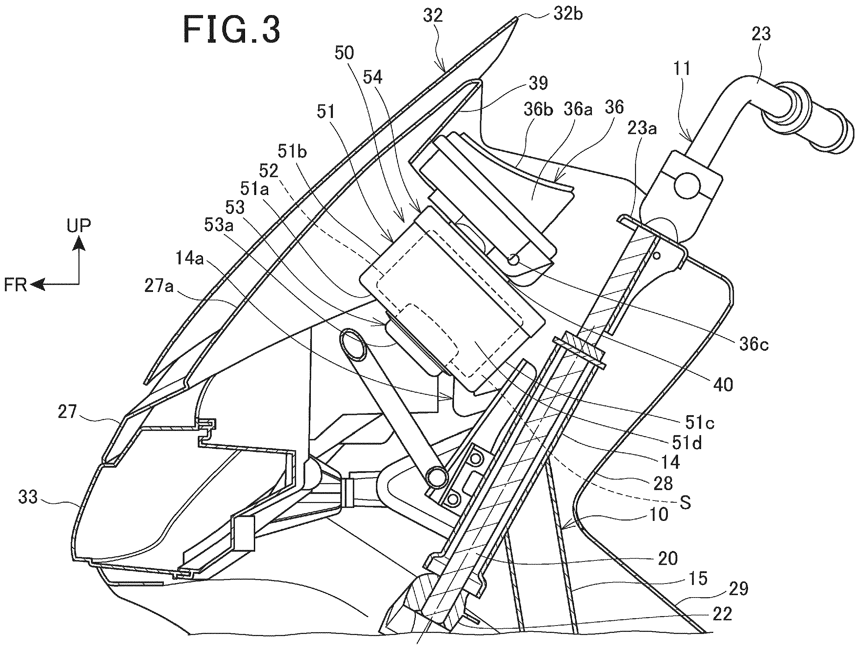

Figure 2 is a view of a peripheral portion of the handle 23 at a front portion of the motorcycle 1 when seen from the rear side. Figure 3 is a sectional view along III-III in Figure 2. In Figures 2 and 3, a rear-view mirror 37 is not illustrated.

Referring to Figures 2 and 3, a meter 36 includes a housing 36a that accommodates a display section that displays a vehicle speed and the like and a display surface 36b provided on an upper surface of the housing 36a.

The housing 36a is formed into a flat box shape and is disposed such that a plate thickness direction is directed in an up-down direction. The housing 36a has a substantially rectangular shape that is long in the vehicle width direction when seen from above.

The meter 36 is disposed at the center of the vehicle width above the head pipe 14 and in front of the handle post 23a. The meter 36 is disposed such that a display surface 36b on the upper surface thereof is inclined toward a rear lower side in order for the driver on the rear upper side to easily view the meter 36.

Since the meter 36 is secured to the vehicle body, the meter 36 does not turn right nor left even when the handle 23 is steered right or left.

A hinge 36c is provided at a lower portion of a rear end portion of the housing 36a of the meter 36. The meter 36 is turnably supported by the vehicle body via the hinge 36c. A pivot axis line of the hinge 36c horizontally extends in the vehicle width direction. The meter 36 can be turned in the vehicle front-back direction around the hinge 36c at the center.

Here, the hinge 36c is a hinge axis that extends in the vehicle width direction and axially supports the meter 36 and is supported by the vehicle body via a stay portion provided at the head pipe 14 of the vehicle body frame 10, a stay portion provided at the vehicle body cover 26, or the like. Note that the hinge 36c may be supported by a retainer 51, which will be described later.

A cover 40 that covers a connecting portion of a harness for the meter 36 from the lower side is attached to the lower surface of the meter 36.

A headlight 33 is provided at a lower portion of a front surface portion of a front cover 27. The wind screen 32 is attached to an upper portion 27a of the front surface portion of the front cover 27.

The front cover 27 includes a visor 39 covering the meter 36 from the front upper side. The visor 39 is an eaves-shaped wall portion extending to be inclined rear-upward in front of the meter 36. The visor 39 is the upper portion 27a of the front surface portion of the front cover 27 extending upward beyond the meter 36.

The wind screen 32 is a plate member that covers the visor 39, the airbag device 50, and the meter 36 from the front side. An upper end 32b of the wind screen 32 is located above the visor 39.

The wind screen 32 is formed of a light-transmitting material such that the passenger can view the front side through the wind screen 32. The visor 39 is provided to block light reaching the upper surface of the meter 36 from the front upper side. The visor 39 is non-transparent and has lower light transmittance than the wind screen 32.

The vehicle body frame 10 includes a stay 14a extending forward from the head pipe 14 (Figure 3). The headlight 33 and the front cover 27 are supported by the stay 14a.

The airbag device 50 is disposed on the front upper side of the head pipe 14 and below the meter 36 in a side view of the vehicle.

The airbag device 50 includes the box-shaped retainer 51, the airbag 52 accommodated in the retainer 51, an inflator 53 configured to discharge gas into the airbag 52, and a cap member 54 blocking the upper surface of the retainer 51.

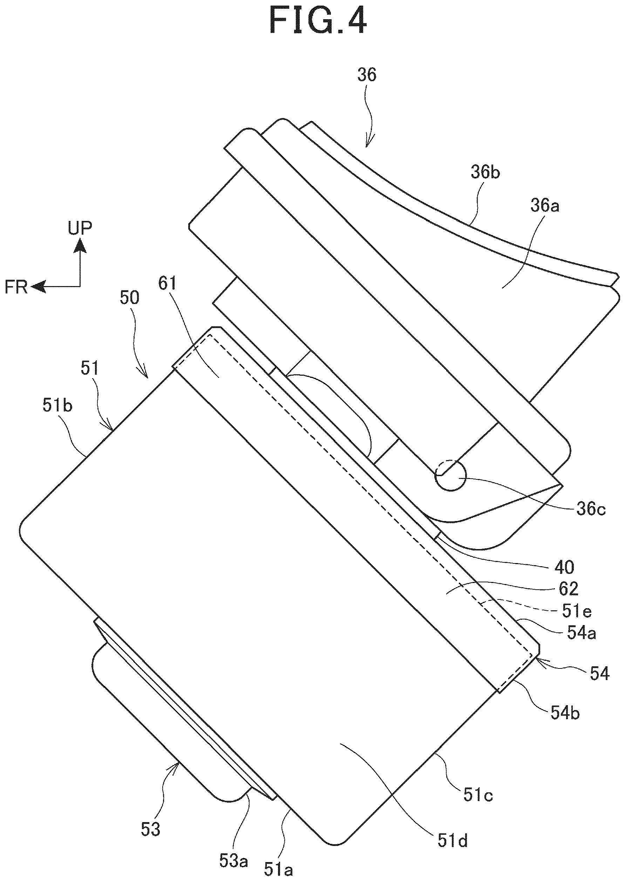

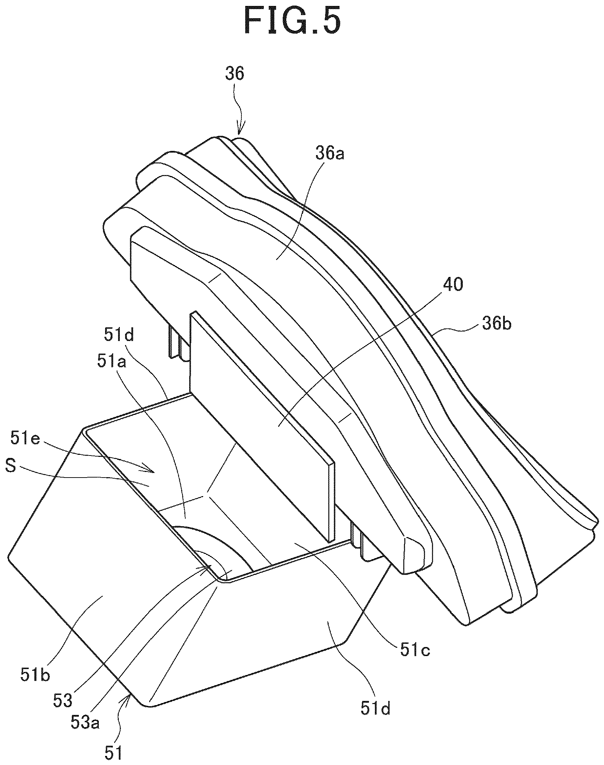

Figure 4 is a left side view of the airbag device 50 and the meter 36. Figure 5 is a perspective view of the airbag device 50 and the meter 36 when seen from the left front side. Here, the airbag 52 and the cap member 54 are not illustrated in Figure 5.

Referring to Figures 3 to 5, the retainer 51 is disposed below the meter 36. The retainer 51 is disposed at the center of the vehicle width on the front upper side of the head pipe 14. The retainer 51 is disposed between the steering system 11 and the wind screen 32 in the vehicle front-back direction. The retainer 51 is supported by a stay 14a.

The retainer 51 has a substantially rectangular box shape in a plan view with the entire upper surface opened upward.

Specifically, the retainer 51 includes a substantially rectangular bottom wall 51a, a front wall 51b extending upward from a front edge of the bottom wall 51a, a rear wall 51c extending upward from a rear edge of the bottom wall 51a, side walls 51d and 51d provided to stand from left and right side edges of the bottom wall 51a, and an upper surface opening 51e.

The bottom wall 51a and the opening 51e are substantially parallel to each other in the side view of the vehicle. The retainer 51 is disposed to be inclined downward on the rear side such that the opening 51e follows the lower surface of the meter 36 in a side view of the vehicle.

The front wall 51b and the rear wall 51c are substantially parallel to each other in a side view of the vehicle and are inclined upward on the rear side.

The left and right side walls 51d and 51d face each other and extend straight in the vehicle front-back direction.

An internal space of the retainer 51 is an airbag accommodation space S (Figure 5) accommodating the airbag 52.

The length of the retainer 51 in the vehicle width direction is shorter than the entire length of the meter 36 in the vehicle width direction.

The inflator 53 is provided at the bottom wall 51a of the retainer 51 and is disposed at the center portion of the bottom wall 51a in the vehicle width direction.

The inflator 53 includes a cylindrical housing 53a. A gas forming agent and an initiator that causes the gas forming agent to start a reaction of generating gas are provided inside the housing 53a. The initiator includes an ignition device. A gas discharging portion 53b of the inflator 53 is located inside the airbag accommodation space S.

The inflator 53 overlaps the front portion of the meter 36 from the lower side in a plan view. In other words, at least a part of the inflator 53 is disposed below the meter 36. Therefore, it is possible to compactly dispose the inflator 53 using the space below the meter 36.

As illustrated in Figure 3, the airbag 52 is accommodated in the airbag accommodation space S of the retainer 51 and is disposed below the meter 36. In other words, a part of the airbag 52 overlaps the meter 36 from the lower side in a plan view from above. It is thus possible to compactly dispose the airbag 52 using the space below the meter 36. The airbag 52 is accommodated in the retainer 51 in a folded state. A lower end portion of the airbag 52 is connected to the inflator 53.

The motorcycle 1 includes an acceleration sensor (not illustrated) adapted to detect impact acting on the motorcycle 1. The acceleration sensor is electrically connected to a control unit (not illustrated) of the motorcycle 1, and the control unit is electrically connected to the inflator 53. The control unit determines whether or not to operate the airbag device 50 on the basis of detected acceleration. In a case in which the airbag device 50 is to be operated, the control unit operates the inflator 53 to discharge gas into the airbag 52. The airbag 52 is expanded by a gas pressure and is deployed upward.

The cap member 54 includes a cap upper surface portion 54a adapted to cover the opening 51e from the upper surface and a cap peripheral wall portion 54b fitted to a peripheral edge portion of the opening 51e in an integrated manner.

The cap member 54 is attached to the retainer 51 by the inner peripheral surface of the cap peripheral wall portion 54b being fitted to the outer peripheral surface of the peripheral edge portion of the opening 51e.

The cap member 54 includes a cleavage portion 61 that is cleaved when the airbag 52 is deployed and a secured portion 62 that is secured to the opening 51e of the retainer 51 even after the airbag 52 is deployed.

The cleavage portion 61 is a front portion of the cap member 54 in a side view of the vehicle, and the secured portion 62 is a rear portion of the cap member 54 in a side view of the vehicle.

The lower surface of the meter 36 is coupled to the cap upper surface portion 54a of the cap member 54 via a cover 40.

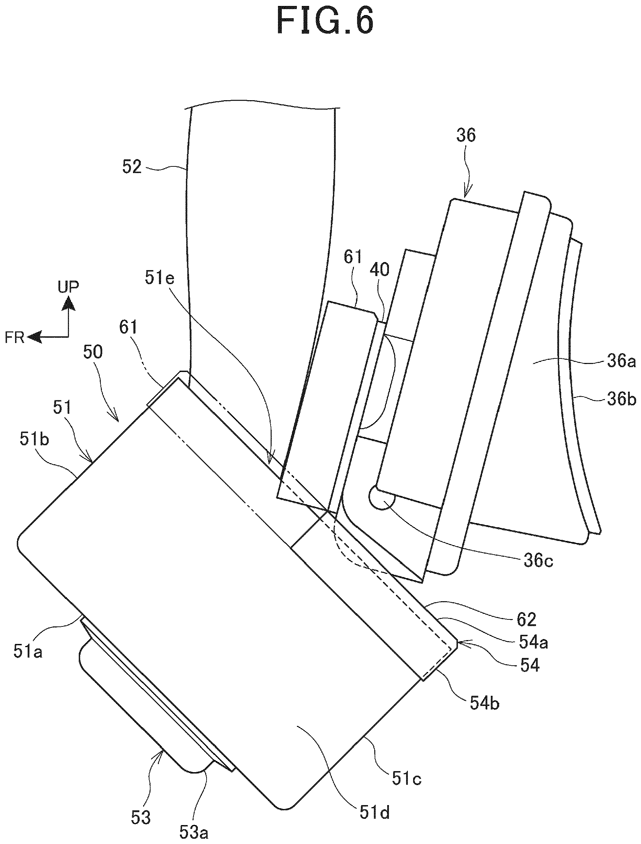

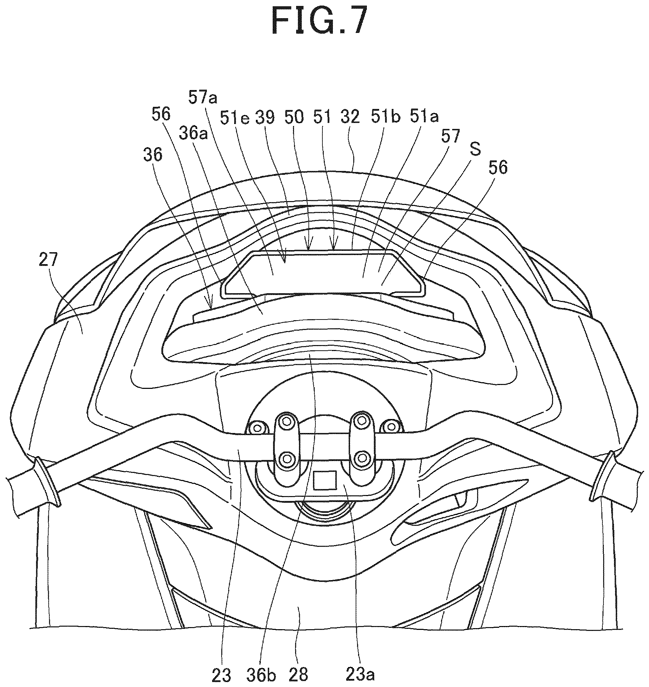

Figure 6 is a left side view illustrating a state in which the airbag 52 is deployed upward. Figure 7 is a view of a state in which the opening 51e of the retainer 51 is opened when seen from above. Here, the airbag 52 is not illustrated in Figure 7.

Referring to Figures 3 to 7, if gas is discharged from the inflator 53, then the airbag 52 expands by the gas and is deployed upward through the opening 51e of the retainer 51. If the airbag 52 expands, the cap member 54 is pushed and cleaved by the airbag 52, and the meter 36 is pushed by the airbag 52 and is turned backward around the hinge 36c at the center. In this manner, the opening 51e is opened.

Specifically, referring to Figures 4 and 5, the cleavage portion 61 of the cap member 54 covers the front portion of the opening 51e of the retainer 51 in a state before the airbag 52 is deployed. The secured portion 62 of the cap member 54 covers the rear portion of the opening 51e.

Also, the front portion of the meter 36 is located above the cleavage portion 61 and covers the front portion of the opening 51e from above.

The rear portion of the meter 36 is located above the secured portion 62 and covers the rear portion of the opening 51e from above.

The hinge 36c is located immediately above the rear portion of the opening 51e.

Referring to Figures 5 to 7, if the airbag 52 is deployed, then the cleavage portion 61 of the cap member 54 is bent backward along with the meter 36 with the backward turning of the meter 36. In this manner, the cleavage portion 61 and the meter 36 do not cover the front portion of the opening 51e from above, and the front portion of the opening 51e is opened upward. The airbag 52 is deployed upward through the front portion of the opening 51e.

The airbag 52 that is deployed upward from the front portion of the opening 51e is guided backward on the upper side by the rear surface of the visor 39 above the opening 51e and the rear surface of the wind screen 32 and is deployed upward.

In the embodiment, since the meter 36 is turned and opens the opening 51e of the retainer 51, the opening 51e of the retainer 51 can be disposed below the meter 36. Therefore, it is possible to compactly dispose the retainer 51 using the space below the meter 36.

The meter 36 is opened up to an angle at which the lower surface of the meter 36 is inclined backward with respect to the vertical direction in a side view of the vehicle. The lower surface of the meter 36 and the cleavage portion 61 in the opened state guide the upward deployment of the airbag 52 from the rear side of the airbag 52.

The retainer 51 is provided on the upper side of the head pipe 14 and is located near the upper body from the head to the breast of the passenger in the up-down direction. It is thus possible to appropriately protect the passenger even when the length of the airbag 52 in the up-down direction in a deployed state is reduced and thereby to reduce the size of the airbag device 50.

In a state in which the meter 36 is turned backward and the opening 51e is opened, the secured portion 62 of the cap member 54 and the rear portion of the meter 36 are located above the rear portion of the opening 51e and cover the rear portion of the opening 51e from above. In other words, the secured portion 62 of the cap member 54 and the rear portion of the meter 36 block the rear portion (a part of the opening) of the opening 51e and guide the deployment direction of the airbag 52 such that the airbag 52 is deployed upward from the front portion of the opening 51e.

As described above, according to the embodiment to which the present invention is applied, the airbag device 50 of the motorcycle 1 includes the inflator 53, the airbag 52 that expands by gas discharged from the inflator 53, and the retainer 51 accommodating the airbag 52. The airbag 52 is deployed upward from the opening 51e of the retainer 51, the retainer 51 is provided below the meter 36 provided in the vicinity of the steering handle 23, and the meter 36 openably and closably covers the opening 51e.

With this configuration, the meter 36 openably and closably covers the opening 51e of the retainer 51, and the airbag 52 can be deployed upward from the opening 51e in a state in which the opening 51e is opened. It is thus possible to dispose the retainer 51 using the space below the meter 36 and to compactly dispose the airbag device 50 at the front portion of the motorcycle 1.

Also, the meter 36 is turned with the hinge 36c and opens the opening 51e of the retainer 51. With this configuration, since the meter 36 is turned with the hinge 36c, it is possible to cause the meter 36 to be appropriately turned to open or close the opening 51e of the retainer 51.

Also, the meter 36 is provided such that the display surface 36b on the upper surface is inclined downward on the rear side in a side view of the vehicle, and the hinge 36c may have a pivot axis line directed in the vehicle width direction and may be provided at a rear end portion of the meter 36. With this configuration, since the meter 36 disposed to be inclined downward on the rear side in a side view of the vehicle is turned with the hinge 36c at the rear end portion of the meter 36, it is possible to efficiently open the opening 51e of the retainer 51.

Further, the meter 36 covers the rear portion of the opening 51e from above in a state in which the opening 51e is opened. With this configuration, it is possible to guide the deployment direction of the airbag 52 with the meter 36 covering the rear portion of the opening 51e from above.

Also, the meter 36 is turned backward to open the front portion of the opening 51e. With this configuration, it is possible to efficiently cause the front portion of the opening 51e to be exposed upward and to satisfactorily deploy the airbag 52 upward by the meter 36 being turned backward.

Moreover, the retainer 51 and the meter 36 are provided in front of the handle 23. With this configuration, it is possible to cause the airbag 52 to be deployed upward from the retainer 51 located below the meter 36 in front of the handle 23.

In addition, the cap member 54 configured to cover the opening 51e and be cleaved by the airbag 52 is provided, and the meter 36 covers the cap member 54 from above. With this configuration, it is possible to prevent foreign matters from entering the retainer 51 with the cap member 54.

Note that the aforementioned embodiment illustrates an aspect to which the present invention is applied, and the present invention is not limited to the aforementioned embodiment.

Although the aforementioned embodiment has been described on the assumption that the meter 36 is turned backward and opens the opening 51e, the present invention is not limited thereto. For example, the meter 36 may be turned forward and open the opening 51e via a hinge at a front end portion. Also, the meter 36 may be turned in the vehicle width direction and open the opening 51e.

In addition, the cap member 54 may not be provided, and the opening 51e may be covered directly with the lower surface of the meter 36.

Moreover, although the description has been provided on the assumption that the meter 36 is provided in front of the handle 23, it is only necessary for the meter 36 to be provided in the vicinity of the handle 23, and for example, the meter 36 may be disposed behind the handle 23.

Also, although the motorcycle 1 has been described above as an example of a saddle riding type vehicle in the aforementioned embodiment, the present invention is not limited thereto, and the present invention can be applied to a three-wheel saddle riding type vehicle provided with two front wheels or rear wheels or a saddle riding type vehicle provided with four or more wheels.

### [Reference Signs List]

1 Motorcycle (saddle riding type vehicle)
23 Handle
36 Meter
36b Display surface
36c Hinge
50 Airbag device
51 Retainer
51e Opening
52 Airbag
53 Inflator
54 Cap member

## Claims

1. A saddle riding type vehicle comprising an airbag device that includes: an inflator (53); an airbag (52) configured to expand by gas discharged from the inflator (53); and a retainer (51) accommodating the airbag (52), the airbag (52) being deployed upward from an opening (51e) of the retainer (51),
**characterized in that** the retainer (51) is provided below a meter (36) provided in a vicinity of a steering handle (23), and
the meter (36) openably and closably covers the opening (51e).

2. The saddle riding type vehicle according to claim 1, wherein the meter (36) is turned with a hinge (36c) and opens the opening (51e).

3. The saddle riding type vehicle according to claim 2,
wherein the meter (36) is provided such that a display surface (36b) on an upper surface is inclined downward on a rear side in a side view of the vehicle, and
the hinge (36c) has a pivot axis line directed in a vehicle width direction and is provided at a rear end portion of the meter (36).

4. The saddle-riding vehicle according to any one of claims 1 to 3, wherein the meter (36) covers a part of the opening (51e) from above in a state in which the opening (51e) is opened.

5. The saddle riding type vehicle according to any one of claims 1 to 4, wherein the meter (36) is turned backward to open a front portion of the opening (51e).

6. The saddle riding type vehicle according to any one of claims 1 to 5, wherein the retainer (51) and the meter (36) are provided in front of the handle (23).

7. The saddle riding type vehicle according to any one of claims 1 to 6,
a cap member (54) covering the opening (51e) and configured to be cleaved by the airbag (52) is provided, and
the meter (36) covers the cap member (54) from above.

## Patentansprüche

1. Sattelaufsitzfahrzeug, das eine Airbagvorrichtung aufweist, welche enthält: einen Inflator (53); einen Airbag (52), der konfiguriert ist, um durch von dem Inflator (53) abgegebenes Gas zu expandieren; sowie einen Halter (51), der den Airbag (52) aufnimmt, wobei der Airbag (52) von einer Öffnung (51e) des Halters (51) aufwärts entfaltet wird,
**dadurch gekennzeichnet, dass** der Halter (51) unter einer Messanzeige (36) vorgesehen ist, die in der Nähe einer Lenkstange (23) vorgesehen ist, und
die Messanzeige (36) die Öffnung (51e) öffen- und schließbar bedeckt.

2. Das Sattelaufsitzfahrzeug nach Anspruch 1, wobei die Messanzeige (36) mit einem Gelenk (36c) gedreht wird und die Öffnung (51e) öffnet.

3. Das Sattelaufsitzfahrzeug nach Anspruch 2, wobei die Messanzeige (36) derart vorgesehen ist, dass eine Anzeigeoberfläche (36b) an einer Oberseite, in Seitenansicht des Fahrzeugs, an einer Rückseite nach unten geneigt ist, und
das Gelenk (36c) eine Schwenkachslinie hat, die in Fahrzeugbreitenrichtung ausgerichtet ist, und an einem hinteren Endabschnitt der Messanzeige (36) vorgesehen ist.

4. Das Sattelaufsitzfahrzeug nach einem der Ansprüche 1 bis 3, wobei die Messanzeige (36) einen Teil der Öffnung (51e) von oben her in einem Zustand abdeckt, in dem die Öffnung (51e) geöffnet ist.

5. Das Sattelaufsitzfahrzeug nach einem der Ansprüche 1 bis 4, worin die Messanzeige (36) nach hinten gedreht wird, um einen vorderen Abschnitt der Öffnung (51e) zu öffnen.

6. Das Sattelaufsitzfahrzeug nach einem der Ansprüche 1 bis 5, wobei der Halter (51) und die Messanzeige (36) vor dem Lenker (23) vorgesehen sind.

7. Das Sattelaufsitzfahrzeug nach einem der Ansprüche 1 bis 6, wobei ein Kappenelement (54) vorgesehen ist, das die Öffnung (51e) abdeckt und so konfiguriert ist, dass es durch den Airbag (52) getrennt wird, und
die Messanzeige (36) das Kappenelement (54) von oben her bedeckt.

## Revendications

1. Véhicule de type à selle comprenant un dispositif de coussin de sécurité gonflable qui comporte : un dispositif de gonflage (53) ; un coussin de sécurité gonflable (52) configuré pour se dilater grâce à un gaz libéré par le dispositif de gonflage (53) ; et un élément de retenue (51) hébergeant le coussin de sécurité gonflable (52), le coussin de sécurité gonflable (52) étant déployé vers le haut à partir d'une ouverture (51e) de l'élément de retenue (51),
**caractérisé en ce que** l'élément de retenue (51) est ménagé au-dessous d'un compteur (36) ménagé au voisinage d'un guidon (23), et
le compteur (36) recouvre de manière ouvrable et refermable l'ouverture (51e).

2. Véhicule de type à selle selon la revendication 1, dans lequel le compteur (36) est pivoté à l'aide d'une charnière (36c) et ouvre l'ouverture (51e).

3. Véhicule de type à selle selon la revendication 2,
dans lequel le compteur (36) est ménagé de sorte qu'une surface d'affichage (36b) sur une surface supérieure soit inclinée vers le bas sur un côté arrière dans une vue de profil du véhicule, et
la charnière (36c) possède une ligne d'axe de pivot dirigée dans une direction de largeur de véhicule et est ménagée au niveau d'une portion d'extrémité arrière du compteur (36).

4. Véhicule de type à selle selon l'une quelconque des revendications 1 à 3, dans lequel le compteur (36) recouvre une partie de l'ouverture (51e) par le dessus dans un état dans lequel l'ouverture (51e) est ouverte.

5. Véhicule de type à selle selon l'une quelconque des revendications 1 à 4, dans lequel le compteur (36) est pivoté vers l'arrière pour ouvrir une portion avant de l'ouverture (51e).

6. Véhicule de type à selle selon l'une quelconque des revendications 1 à 5, dans lequel l'élément de retenue (51) et le compteur (36) sont ménagés devant le guidon (23).

7. Véhicule de type à selle selon l'une quelconque des revendications 1 à 6,
un organe capuchon (54) recouvrant l'ouverture (51e) et configuré pour être fendu par le coussin de sécurité gonflable (52) est ménagé, et
le compteur (36) recouvre l'organe capuchon (54) par le dessus.
